# EUROPEAN PATENT APPLICATION

(11) **EP 4 431 213 A1**
(43) Date of publication of application: **18.09.2024**
(21) Application number: 21968122.8
(22) Date of filing: 15.12.2021
(51) Int. Cl.: B23H 7/20

(54) **GRAPHIC DATA EDITING DEVICE, PROCESSING PROGRAM CREATION DEVICE, AND GRAPHIC DATA EDITING METHOD**

(71) Applicant: FANUC CORPORATION, Oshino-mura Minamitsuru-gun Yamanashi 401-0597 (JP)
(72) Inventor: ABE, Hiroyuki, Yamanashi 401-0597 (JP)
(74) Representative: Keil & Schaafhausen Patentanwälte PartGmbB
(86) International application number: PCT/JP2021/046280
(87) International publication number: WO 2023/112206

(57) **Abstract**

This graphic data editing device (10) comprises: a graphic acquisition unit (26) that acquires graphic data (20); a route addition unit (32) that adds a first approach route (38) to the graphic data (20) in accordance with an operator's operation; a determination unit (30) that determines whether a selected processing shape (24) is a second processing shape congruent or similar to the first processing shape; and an automatic route addition unit (34) that automatically adds a second approach route (52) to the graphic data (20) so as to be congruent or similar to a graphic formed by the first processing shape and the first approach route (38).

## Description

### TECHNICAL FIELD

The present invention relates to a graphic data editing device (figure data edit device), a processing program creation device (machining program creation device), and a graphic data editing method (figure data edit method) that edits figure data for creating a machining program for a wire electric discharge machine.

### BACKGROUND ART

A wire electrode of a wire electric discharge machine moves relative to a workpiece. This relative movement is controlled based on a machining program. The machining program is created based on CAD (Computer Aided Design) data representing a figure of a machining shape. The CAD data includes a plurality of machining shapes followed by the wire electrode.

However, the machining shapes indicate the shapes of the products produced by the wire electric discharge machine. In other words, the machining shapes do not indicate a machining start position and an approach path. The machining start position is the position where the wire electrode starts relative movements. The approach path is a path (line shape) connecting the machining start position and the machining shape.

An operator in charge of creating a machining program adds machining start positions and approach paths to figure data according to machining shapes before creating the machining program. The machining program is created based on CAD data to which the machining start positions and the approach paths have been added.

However, the work of adding the machining start position and the approach path to each of the machining shapes in the figure data many times is a burden for an operator. In this regard, JP H03-189708 A discloses a machining shape copying method. According to the disclosure, when a machining shape is copied, the machining start position corresponding to the machining shape is also copied.

### SUMMARY OF THE INVENTION

Based on the above machining shape copying method, for example, when a machining shape is copied, one may consider copying not only the machining start position but also the approach path.

However, there is a case where an operator edits figure data that contains machining shapes beforehand. When an approach path has not yet been assigned to each of the machining shapes, the operator performs an operation of adding the approach path to the figure data. Here, the operator does not copy the machining shape. Therefore, the operator has to perform operations of adding the machining start position and the approach path to the machining shape many times.

The present invention aims to solve the above-mentioned problems.

The first aspect of the present invention is a figure data edit device for editing figure data indicating a plurality of machining shapes based on which a wire electric discharge machine machines one workpiece, comprising: a figure acquisition unit configured to acquire the figure data; a path addition unit configured to add a first approach path leading to a first machining shape, which is any one of the plurality of machining shapes, to the figure data in response to an operation of an operator; a judgment unit configured to select, from the plurality of machining shapes, one machining shape other than the first machining shape and judge whether the selected machining shape is a second machining shape that is congruent or similar to the first machining shape; and an automatic path addition unit configured to, when the selected machining shape is judged to be the second machining shape, automatically add a second approach path leading to the second machining shape to the figure data in a manner so that a resultant figure is congruent or similar to a figure formed by the first machining shape and the first approach path.

The second aspect of the present invention is a machining program creation device including the figure data edit device of the first aspect, and a machining program creation unit that creates, based on the figure data, a machining program for instructing a relative movement of a wire electrode of the wire electric discharge machine with respect to the workpiece.

The third aspect of the present invention is a figure data edit method for editing figure data indicating a plurality of machining shapes based on which a wire electric discharge machine machines one workpiece, comprising: a figure acquisition step of acquiring the figure data; a path addition step of adding a first approach path leading to a first machining shape, which is any one of the plurality of machining shapes, to the figure data in response to an operation of an operator; a judgment step of selecting, from the plurality of machining shapes, one machining shape other than the first machining shape and judging whether the selected machining shape is a second machining shape that is congruent or similar to the first machining shape; and an automatic path addition step of, when the selected machining shape is judged to be the second machining shape, automatically adding a second approach path leading to the second machining shape to the figure data in a manner so that a resultant figure is congruent or similar to a figure formed by the first machining shape and the first approach path.

According to the present invention, it is easy to add approach paths to machining shapes included in the figure data.

### BRIEF DESCRIPTION OF DRAWINGS

FIG. 1 is a schematic block diagram of a figure data edit device according to an embodiment;
FIG. 2 is a diagram illustrating figures displayed on a display screen based on figure data;
FIG. 3 is a diagram illustrating the figure data of FIG. 2 after a first path addition unit edits the figure data;
FIG. 4 is a diagram illustrating edges based on the illustration in FIG. 3;
FIG. 5A is a table illustrating a first order based on the illustration of FIG. 4. FIG. 5B is a table illustrating a second order based on the illustration of FIG. 4;
FIG. 6 is a diagram showing the figure data of FIG. 4 after a second path addition unit edits the figure data;
FIG. 7 is a flowchart illustrating a flow of a figure data edit method according to an embodiment;
FIG. 8 is a diagram illustrating figure data according to a first modified example;
FIG. 9A is a table illustrating a second order based on the illustration of FIG. 8. FIG. 9B is a table showing an order in which the second order in FIG. 9A is inverted;
FIG. 10 is a schematic block diagram of a machining program creation device with a figure data edit device; and
FIG. 11 is a flowchart illustrating a flow of a figure data edit method according to a seventh modified example.

### DETAILED DESCRIPTION OF THE INVENTION

### [Embodiment]

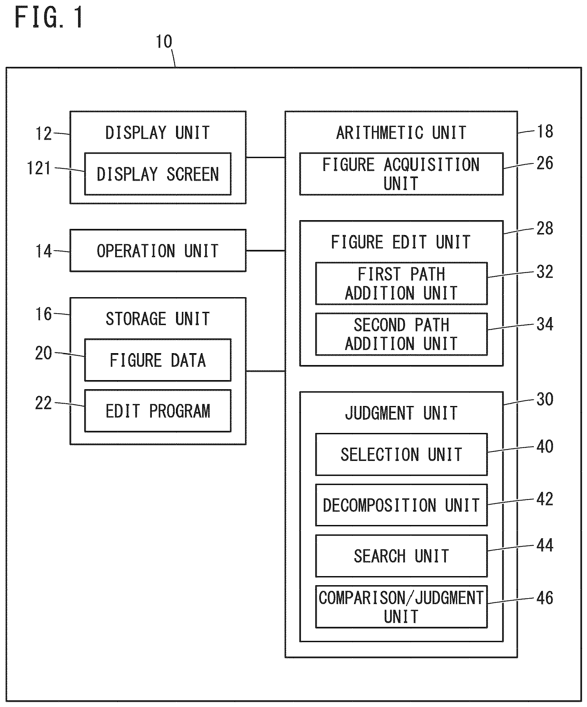

FIG. 1 is a schematic block diagram of a figure data edit device 10 according to an embodiment.

The figure data edit device 10 is an electronic device (computer) including a display unit 12, an operation unit 14, a storage unit 16, and an arithmetic unit 18.

The display unit 12 is a display device having a display screen 121. Information is displayed on the display screen 121 as appropriate. The material of the display unit 12 includes liquid crystals. However, the material of the display unit 12 is not limited to liquid crystals. For example, the material of the display unit 12 may include OEL (Organic Electro-Luminescence).

The operation unit 14 is an input device that accepts information input by an operator. The operation unit 14 includes, for example, a mouse, a keyboard, and a touch pad. The operation unit 14 may include a touch panel. In this case, the touch panel is attached to the display screen 121.

The storage unit 16 has one or more memories. For example, the storage unit 16 includes a RAM (Random Access Memory) and a ROM (Read Only Memory). The storage unit 16 stores figure data 20 and an edit program 22.

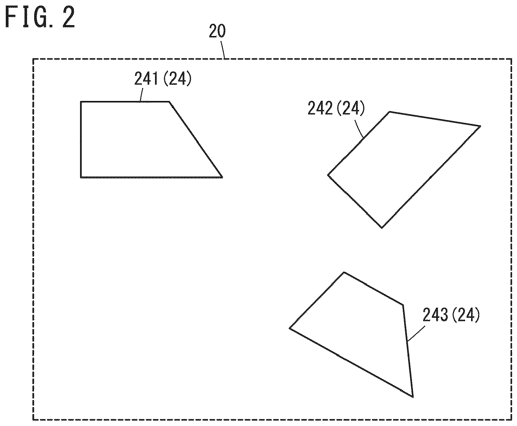

FIG. 2 is a diagram illustrating figures displayed on the display screen 121 based on the figure data 20.

The figure data 20 is data representing machining shapes 24. The figure data 20 is a data file created using, for example, a CAD system.

The machining shape 24 indicates a shape to be machined by the wire electric discharge machine. The figure data 20 in FIG. 2 includes machining shapes 24 to be machined by the wire electric discharge machine for one workpiece. The figure data 20 of FIG. 2 includes three machining shapes 24 (241, 242, 243) for illustrative purposes.

Each of the machining shapes 24 is in the form of a loop. To this extent, the shape of the machining shape 24 is not limited. Each of the machining shapes 24 illustrated in FIG. 2 is a trapezoid (polygon).

The edit program 22 is a program for causing the figure data edit device 10 to execute the figure data edit method of the present embodiment. The figure data edit method will be described later.

The arithmetic unit 18 has one or more processors. For example, the arithmetic unit 18 includes a CPU (Central Processing Unit) and a GPU (Graphics Processing Unit). The arithmetic unit 18 can refer to the information stored in the storage unit 16 as appropriate.

The arithmetic unit 18 includes a figure acquisition unit 26, a figure edit unit 28, and a judgment unit 30. The figure acquisition unit 26, the figure edit unit 28, and the judgment unit 30 are realized by the arithmetic unit 18 executing the edit program 22.

The figure acquisition unit 26 acquires the figure data 20. The figure acquisition unit 26 acquires the figure data 20 by referring to the storage unit 16.

However, the figure acquisition unit 26 may acquire the figure data 20 from an external device of the figure data edit device 10 by communicating with the external device. In this case, the figure data edit device 10 and the external device are communicably connected. The external device of the figure data edit device 10 is, for example, a computer such as a computerized numerical controller (CNC) that controls the wire electric discharge machine. The figure acquisition unit 26 may acquire the figure data 20 from a removable external storage medium such as a USB (Universal Serial Bus) memory.

The figure edit unit 28 has a first path addition unit (path addition) 32 and a second path addition unit (automatic path addition unit) 34.

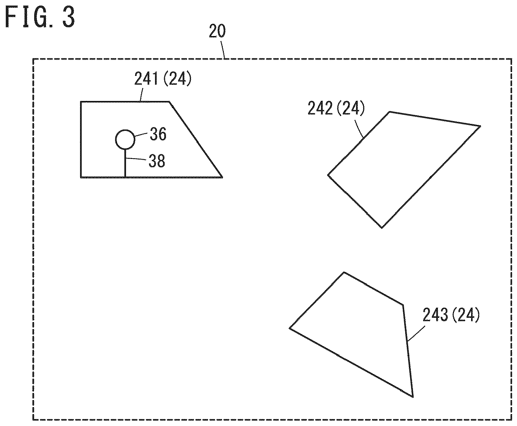

FIG. 3 is a diagram illustrating the figure data 20 of FIG. 2 after being edited by the first path addition unit 32.

The first path addition unit 32 adds a machining start position (first machining start position) 36 and an approach path (first approach path) 38 to the figure data 20 in accordance with operations by the operator.

The machining start position 36 indicates the initial position of the wire electrode that performs machining along any one of the machining shapes 24. Here, any one of the machining shapes 24 is arbitrarily selected by the operator via the operation unit 14. For illustration purposes, the operator of the present embodiment selects a machining shape 241 (see FIG. 3). The machining shape 241 selected here is also referred to as the first machining shape 241 in the following description. A hole through which the wire electrode can be inserted is formed at a position of an actual workpiece indicated by the machining start position 36.

The approach path 38 is a path followed by the wire electrode, connecting the machining start position 36 and the first machining shape 241.

The figure data 20 (FIG. 3) edited by the first path addition unit 32 is displayed on the display screen 121.

The second path addition unit 34 will be described later.

The judgment unit 30 judges whether the machining shape 24 other than the first machining shape 241 in the figure data 20 is congruent with the first machining shape 241. To make this judgment, the judgment unit 30 includes a selection unit 40, a decomposition unit 42, a search unit 44, and a comparison/judgment unit 46.

The selection unit 40 sequentially selects each of the machining shapes 24 other than the first machining shape 241 among the machining shapes 24. Here, the selection order of the machining shapes 24 may be random or an order determined based on a predetermined rule. In the case of the present embodiment, the figure data 20 includes a machining shape 242 and a machining shape 243 in addition to the first machining shape 241. Therefore, the selection unit 40 selects the machining shape 242 or the machining shape 243. When the operator specifies one machining shape 24 other than the first machining shape 241, the selection unit 40 may select the specified machining shape 24.

As an example, the selection unit 40 of the present embodiment first selects the machining shape 242. In light of this, the machining shape 242 is also referred to as the selected machining shape 242 in the following.

The decomposition unit 42 decomposes the first machining shape 241 and the selected machining shape 242 into figure elements. The figure element is a unit of information used to compare the first machining shape 241 and the selected machining shape 242 with each other. The figure elements are, for example, line segments (edges).

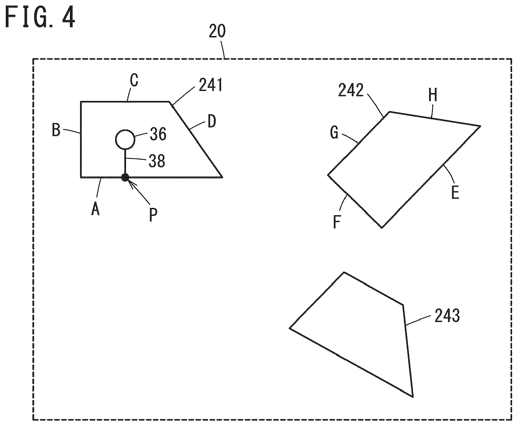

FIG. 4 is a diagram illustrating edges based on the illustration of FIG. 3.

For example, the first machining shape 241 is a trapezoid (polygon) formed by four edges, namely, an edge A, an edge B, an edge C, and an edge D. Therefore, the decomposition unit 42 can decompose the first machining shape 241 into the edge A, the edge B, the edge C, and the edge D.

The selected machining shape 242 is a trapezoid formed by four edges, namely, an edge E, an edge F, an edge G, and an edge H. Therefore, the decomposition unit 42 can decompose the selected machining shape 242 into the edge E, the edge F, the edge G, and the edge H.

The storage unit 16 stores the result of decomposition of the first machining shape 241 and the selected machining shape 242. Here, the storage unit 16 stores a group of edges of the first machining shape 241 (first group) and a group of edges of the selected machining shape 242 (second group) in a distinguishable manner.

The search unit 44 searches for an edge (approach edge) having a contact point P at which the edge contacts the approach path 38, among the first machining shape 241.

The search unit 44 searches for one edge having the same length as the approach edge among the selected machining shape 242. For example, in the example of FIG. 4, the approach edge is edge A. In this case, the search unit 44 searches for one edge having the same length as the edge A among the edge E, the edge F, the edge G, and the edge H.

The comparison/judgment unit 46 determines the order (first order) of the edges of the first machining shape 241 when one edge having the same length as the approach edge is included in the selected machining shape 242.

The first order is determined based on the approach edge and a predetermined cyclic direction. The approach edge of this embodiment is the edge A (see FIG. 4). The predetermined cyclic direction is a right-handed (clockwise) direction or a left-handed (counterclockwise) direction. The predetermined cyclic direction of the present embodiment is a clockwise direction for illustrative purposes.

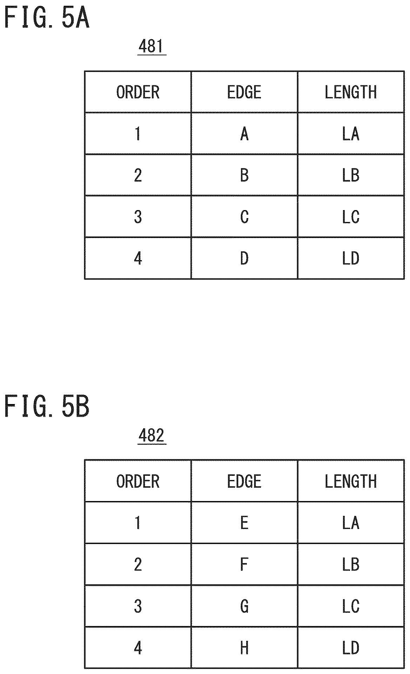

FIG. 5A is a table 481 illustrating a first order based on the illustration of FIG. 4. The first column (order) of the table 481 indicates the first order. The second column (edge) of the table 481 indicates the name of each edge in the present embodiment. The third column (length) of table 481 shows the length of each edge.

The first machining shape 241 includes the edge B, the edge C, and the edge D in this order along the clockwise direction from the edge A. In this case, the first order is, for example, the order in which the edge A, the edge B, the edge C, and the edge D are arranged in this order.

Next, the comparison/judgment unit 46 determines the order (second order) of the edges of the selected machining shape 242. The second order is determined based on the searched one edge and the predetermined cyclic direction.

FIG. 5B is a table 482 illustrating a second order based on the illustration of FIG. 4. The format of table 482 is the same as that of the table 481. However, the first column (order) of the table 482 indicates the second order.

In this embodiment, the length of the approach edge (edge A) is LA. As a result of the search performed by the search unit 44, the length of the edge E is also LA. In this case, the second order is the order in which the edge E, the edge F, the edge G, and the edge H are arranged in this order along the same clockwise direction as the first order.

The storage unit 16 stores the contents of the table 481 (first order) and the contents of the table 482 (second order).

Next, the comparison/judgment unit 46 associates the edges excluding the approach edge of the first machining shape 241 with the edges excluding the searched one edge of the selected machining shape 242. In the case of the present embodiment, the edges B to D are associated with the edges F to H.

The comparison/judgment unit 46 associates the edges B to D with the edges F to H based on the first order and the second order. For example, the edge B in the second position in the first order is associated with the edge F in the second position in the second order. The edge C in the third position in the first order is associated with the edge G in the third position in the second order. The edge D in the fourth position in the first order is associated with the edge H in the fourth position in the second order.

The comparison/judgment unit 46 judges whether the edges B to D of the first machining shape 241 and the edges corresponding to the edges B to D among the edges F to H of the selected machining shape 242 are the same length. That is, the comparison/judgment unit 46 judges whether (1) the length of the edge B = the length of the edge F, (2) the length of the edge C = the length of the edge G, and (3) the length of the edge D = the length of the edge H.

When the edges B to D of the first machining shape 241 and the edges corresponding to the edges B to D among the edges F to H of the selected machining shape 242 are the same length, the comparison/judgment unit 46 calculates the area of the first machining shape 241 and the area of the selected machining shape 242. The comparison/judgment unit 46 compares the area of the first machining shape 241 with the area of the selected machining shape 242. The area of the first machining shape 241 calculated here is the area of the first machining shape 241 before the machining start position 36 and the approach path 38 are added to the figure data 20.

When the area of the first machining shape 241 and the area of the selected machining shape 242 are the same, the comparison/judgment unit 46 judges that the first machining shape 241 and the selected machining shape 242 are congruent. The selected machining shape 242 congruent with the first machining shape 241 is also referred to as the second machining shape 242 in the following description.

A judgment result of the comparison/judgment unit 46 is referred to by the second path addition unit 34 described above. When it is judged that the selected machining shape 242 and the first machining shape 241 are congruent, the second path addition unit 34 automatically edits the figure data 20 as follows.

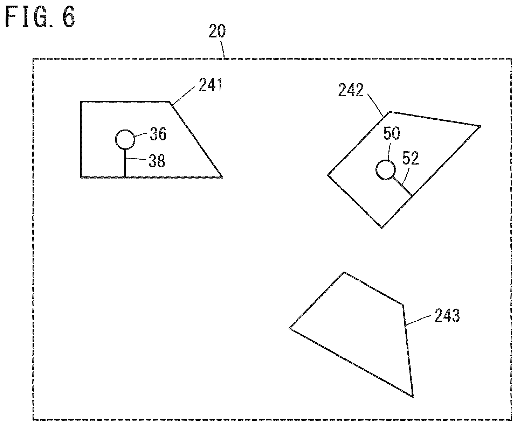

FIG. 6 is a diagram showing the figure data 20 of FIG. 4 after being edited by the second path addition unit 34.

The second path addition unit 34 adds a machining start position (second machining start position) 50 and an approach path (second approach path) 52 to the figure data 20. The approach path 52 is a path connecting the machining start position 50 and the second machining shape 242. Thus, the operator can easily obtain the figure data 20 including the machining start position 50 and the approach path 52.

Here, the second path addition unit 34 edits the figure data 20 in a manner so that the figure formed by the machining start position 50, the approach path 52, and the second machining shape 242 is congruent with the figure formed by the machining start position 36, the approach path 38, and the first machining shape 241.

The judgment unit 30 judges whether the remaining machining shapes 243 in the figure data 20 are also congruent with the first machining shape 241. The explanation of the specific flow of the judgement substantially a duplicate of the above explanation and thus is omitted. When the machining shape 243 is congruent with the first machining shape 241, the second path addition unit 34 automatically adds to the figure data 20 the machining start position corresponding to the machining shape 243 and the approach path corresponding to the machining shape 243.

According to the figure data edit device 10, the machining start position 50 and the approach path 52 are automatically added to the figure data 20. Therefore, the operator can easily obtain the figure data 20 including machining start positions and approach paths.

Moreover, the figure formed by the machining start position 50, the approach path 52, and the second machining shape 242 is congruent with the figure formed by the machining start position 36, the approach path 38, and the first machining shape 241. Thus, the figure data 20 can be automatically edited with the content reflecting the intention of the operator.

For example, when the figure data 20 is for die machining, the operator sets the machining start position 36 and the approach path 38 to the inside of the first machining shape 241. Here, if the machining start position 50 and the approach path 52 are set outside the second machining shape 242, the wire electrode cannot perform die machining along the second machining shape 242.

In this regard, the figure data edit device 10 (second path addition unit 34) can automatically set the second machining start position 50 to the inside of the second machining shape 242 in accordance with the first machining start position 36 set to the inside of the first machining shape 241.

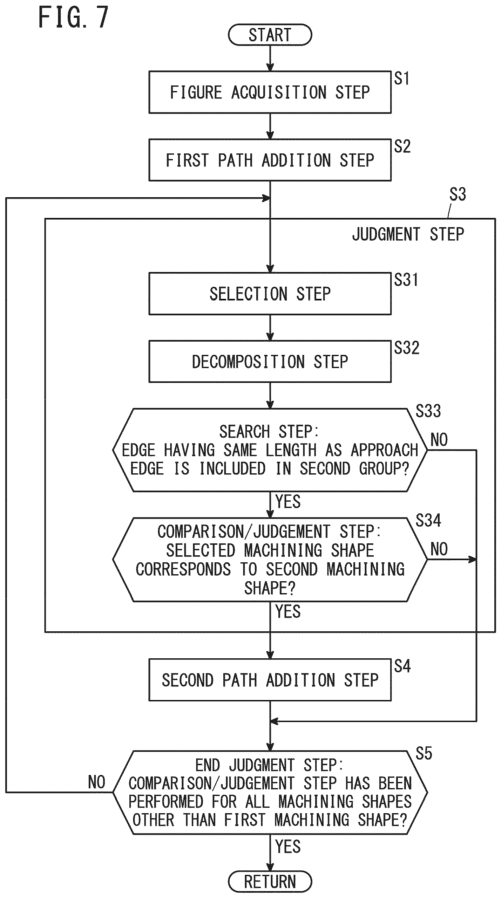

FIG. 7 is a flowchart illustrating the flow of the figure data edit method according to the embodiment.

The figure data edit device 10 can execute the figure data edit method of FIG. 7. The figure data edit method of FIG. 7 includes a figure acquisition step S1, a first path addition step (path addition step) S2, a judgment step S3, a second path addition step (automatic path addition step) S4, and an end judgment step S5.

In the figure acquisition step S1, the figure acquisition unit 26 acquires the figure data 20.

The first path addition step S2 is started after the completion of the figure acquisition step S1. In the first path addition step S2, the first path addition unit 32 adds the machining start position 36 and the approach path 38 to the figure data 20 in accordance with the operations by the operator. The approach path 38 connects the machining shape 24 (first machining shape) to the machining start position 36.

The judgment step S3 is started after the completion of the first path addition step S2. The judgment step S3 includes a selection step S31, a decomposition step S32, a search step S33, and a comparison judgement step S34.

The selection step S31 is started after the completion of the first path addition step S2. In the selection step S31, the selection unit 40 selects one machining shape 24 other than the first machining shape among the machining shapes 24.

The decomposition step S32 is started after the completion of the selection step S31. In the decomposition step S32, the decomposition unit 42 decomposes the first machining shape and the selected machining shape 24 (selected machining shape) into figure elements (e.g., edges).

The search step S33 is started after the completion of the decomposition step S32. In search step S33, the search unit 44 searches edges of the selected machining shape for one edge having the same length as the edge (approach edge) having the contact point P at which the first approach path 38 contacts.

The comparison/judgment step S34 is started when one edge of the same length as the approach edge is found in the search step S33 (search step S33: YES). In the comparison/judgment step S34, the comparison/judgment unit 46 compares the selected machining shape and the first machining shape with each other. Further, the comparison/judgment unit 46 judges, based on the comparison result, whether the selected machining shape corresponds to a second machining shape congruent with the first machining shape.

The second path addition step S4 is started when the selected machining shape corresponds to the second machining shape (comparison/judgment step S34: YES). In the second path addition step S4, the second path addition unit 34 automatically adds the second machining start position 50 and the second approach path 52 to the figure data 20.

The end judgment step S5 is started when one edge of the same length as the approach edge is not found (search step S33: NO), when the selected machining shape does not correspond to the second machining shape (comparison/judgment step S34: NO), or after the second path addition step S4 is performed. In the end judgment step S5, it is judged whether the judgment as to whether the machining shape corresponds to the second machining shape (comparison/judgment step S34) has been performed for all the machining shapes 24 other than the first machining shape. This judgment is performed by, for example, the judgment unit 30.

If the comparison/judgment step S34 is performed for all the machining shapes 24 other than the first machining shape (S5: YES), the figure data edit device 10 terminates the figure data edit method. On the other hand, if there remains a machining shape 24 that has not yet been compared with the first machining shape in the comparison/judgment step S34 (end judgment step S5: NO), the series of steps of the selection step S31 to the end judgment step S5 is performed again. Here, the selection unit 40 selects one machining shape 24 that has not been compared with the first machining shape in the comparison/judgment step S34 performed after the start (START) of the figure data edit method.

According to the above described figure data edit method, the operator can easily obtain the figure data 20 to which the second machining start position 50 and the second approach path 52 are added.

In the selection step S31, a selected machining shape may be selected from the machining shapes 24 specified beforehand by the operator. In this case, in the end judgment step S5, it is judged whether the comparison/judgment step S34 has been performed for all the machining shapes 24 specified by the operator. If it is judged that the comparison/judgment step S34 has been performed for all the machining shapes 24 specified by the operator, the figure data edit device 10 terminates the figure data edit method.

### Modified Examples

In the following, modified examples of the above embodiment will be described. However, the description overlapping with the above embodiment will be omitted in the following description as much as possible. Components already described in the above embodiment are given the same reference numerals as in the above embodiment unless otherwise noted.

### (Modified example 1)

The judgment unit 30 may judge that the selected machining shape is congruent with the first machining shape when the selected machining shape is a mirror image of the first machining shape. In this case, the judgment unit 30 performs a process to be described next, for example.

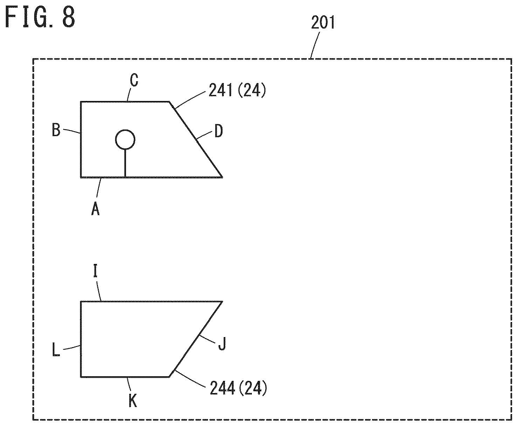

FIG. 8 is a diagram illustrating the figure data 201 according to the first modified example.

A machining shape 241 in FIG. 8 is the same as the machining shape 241 in FIG. 4. A machining shape 244 in FIG. 8 is formed by an edge I, an edge J, an edge K, and an edge L.

The machining shape 244 is a selected machining shape in this example. In light of this, the selected machining shape is also described as the selected machining shape 244 in this example. In this example, the second order is the order of the edges forming the selected machining shape 244.

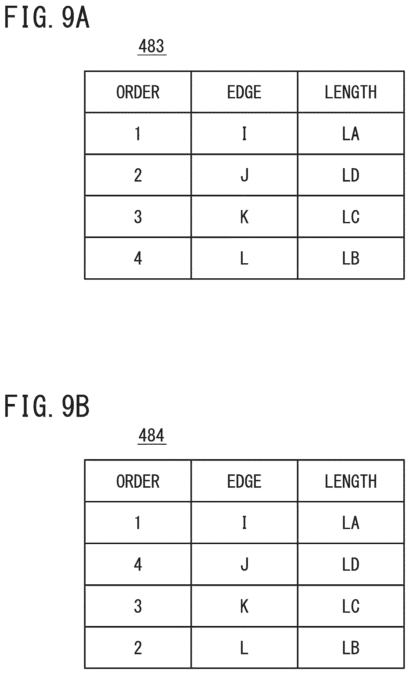

FIG. 9A is a table 483 illustrating the second order based on the illustration of FIG. 8. The format of the table 483 is the same as that of the table 482.

As a result of the search performed by the search unit 44, the length of the edge I is equal to the length of the approach edge (edge A). In this case, the comparison/judgment unit 46 determines the second order as shown in the table 483 based on the edge I and the cyclic direction of the first order.

The second order of the table 483 is the order in which the edge I, the edge J, the edge K, and the edge L are followed along the selected machining shape 244 in the same clockwise direction as the first order (see FIG. 5A). In this case, the edge B and the edge J correspond to each other based on the first order of the table 481 and the second order of the table 483. Also, the edge C and the edge K correspond to each other. The edge D and the edge L correspond to each other.

However, in this example, at least the length (LB) of the edge B and the length (LD) of the edge J are different. In this case, the comparison/judgment unit 46 inverts one of the first order and the second order.

FIG. 9B is a table 484 showing the order in which the second order in FIG. 9A is inverted. The format of the table 484 is the same as that of the table 483.

The comparison/judgment unit 46 inverts, for example, the second order of FIG. 9A as shown in FIG. 9B. The second order after the inversion is the order in which the edge I, the edge L, the edge K, and the edge J are followed along the selected machining shape 244 in the counterclockwise direction.

The comparison/judgment unit 46 associates again the edges of the first machining shape 241 and the edges of the selected machining shape 244 with each other based on the first order and the second order after the inversion. This makes the edge B and the edge L correspond to each other. In addition, the edge C and the edge K correspond to each other. The edge D and the edge J correspond to each other.

The comparison/judgment unit 46 compares the lengths of the two corresponding edges again. That is, the comparison/judgment unit 46 judges whether (4) the length of the edge B = the length of the edge L, (5) the length of the edge C = the length of the edge K, and (6) the length of the edge D = the length of the edge J.

When all of (4) to (6) hold, the comparison/judgment unit 46 compares the area of the first machining shape 241 and the area of the selected machining shape 244 with each other. If the area of the first machining shape 241 is the same as the area of the selected machining shape 244, then the selected machining shape 244 is a mirror image of the first machining shape 241.

When the selected machining shape 244 is a mirror image of the first machining shape 241, the second path addition unit 34 adds the second machining start position 50 and the second approach path 52 to the figure data 201. However, the figure formed by the second machining start position 50, the second approach path 52, and the selected machining shape 244 is a mirror image of the figure formed by the first machining start position 36, the first approach path 38, and the first machining shape 241.

### (Modified example 2)

The method for judging whether the selected machining shape is congruent with the first machining shape is not limited to the embodiment as long as it can determine whether the selected machining shape is congruent with the first machining shape.

For example, the machining shape (24) may have a circular shape. In this case, the figure elements may include the diameter of the machining shape. When the plurality of machining shapes have a circular shape, the judgment unit 30 may judge whether the diameters of the machining shapes are equal. Two circles of the same diameter are congruent.

In addition, the machining shape (24) may include a curve (arc line). In this case, the figure elements may include the length of the curve and the curvature of the curve. The judgment unit 30 may also judge whether the lengths and curvatures of the curves are equal. Two curves with the same length and curvature are congruent. The figure elements regarding the curve (arc) may include a radius of curvature.

In addition, there is a case where regarding the comparison/judgment step S34, the number of figure elements is different between the first machining shape and the selected machining shape in the first place. In this case, the first machining shape and the selected machining shape cannot be congruent. For example, when the first machining shape is a polygon, the first machining shape has a plurality of line segments (edges). In contrast, for example, when the selected machining shape is a circle, the selected machining shape has only a single curve (closed curve). In other words, the circular shape does not have line segments (edges). Based on the above, the judgment unit 30 (comparison/judgment unit 46) may judge that the selected machining shape does not correspond to the second machining shape when the number of figure elements of the first machining shape and the number of figure elements of the selected machining shape are different.

### (Modified example 3)

The judgment unit 30 may judge whether the selected machining shape is similar to the first machining shape.

To judge whether the selected machining shape is similar to the first machining shape, the judgment unit 30 associates, for example, the edges of the first machining shape with the edges of the selected machining shape. This correspondence is established based on the order of the edges of the first machining shape and the order of the edges of the selected machining shape. However, the approach edge of the first machining shape is associated with one edge of the selected machining shape having a length different from the approach edge among the edges of the selected machining shape.

The judgment unit 30 calculates ratios between the edges of the first machining shape and the edges of the selected machining shape corresponding to each of the edges of the first machining shape. If the ratios are equal to each other, the first machining shape and the selected machining shape are similar.

When the ratios are different from each other, the judgment unit 30 changes the correspondence between the edges of the first machining shape and the edges of the selected machining shape. Here, each of the edges of the first machining shape is associated with, of the edges of the selected machining shape, an edge adjacent along a predetermined cyclic direction (clockwise/counterclockwise) to the one that corresponded to itself in the pre-change correspondence. The judgment unit 30 calculates the ratios again based on the post-change correspondence.

In this way, the judgment unit 30 repeats establishing the correspondence between the edges of the first machining shape and the edges of the selected machining shape and calculating the ratios. If there is no correspondence in which the ratios are equal to each other, the first machining shape and the selected machining shape are not similar.

However, the method for judgment whether the selected machining shape is similar to the first machining shape is not limited as long as it can judgment whether the selected machining shape is similar to the first machining shape.

When the selected machining shape is similar to the first machining shape, the second path addition unit 34 automatically adds the second machining start position 50 and the second approach path 52 to the figure data 20. The second approach path 52 connects the second machining start position 50 and the selected machining shape. The figure formed by the second machining start position 50, the second approach path 52, and the selected machining shape is similar to the figure formed by the first machining start position 36, the first approach path 38, and the first machining shape.

### (Modified example 4)

There is a situation where at the time when the figure acquisition unit 26 acquires the figure data 20, the first machining start position 36 has already been added to the first machining shape. In this case, the first path addition unit 32 adds only the first approach path 38 out of the first machining start position 36 and the first approach path 38 to the figure data 20 in accordance with the operator's operation.

### (Modified example 5)

The figure data edit device 10 may be configured integrally with the aforementioned CNC.

### (Modified example 6)

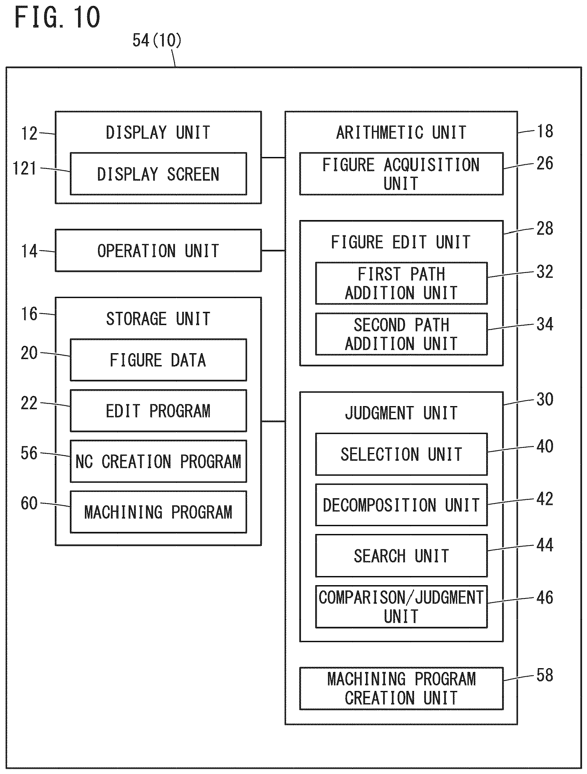

FIG. 10 is a schematic block diagram of a machining program creation device 54 provided with a figure data edit device 10.

The figure data edit device 10 may be configured integrally with the machining program creation device 54. The machining program creation device 54 in FIG. 10 includes the components (see FIG. 1) of the figure data edit device 10.

The machining program creation device 54 further includes an NC creation program 56 and a machining program creation unit 58.

The NC creation program 56 is a program for causing the machining program creation device 54 to create the machining program 60. The machining program 60 is a program for instructing the relative movements of the wire electrode of the wire electric discharge machine with respect to a workpiece. The NC creation program 56 is stored in the storage unit 16 of the machining program creation device 54.

The machining program creation unit 58 creates a machining program 60 based on the figure data 20. Thus, the operator obtains the machining program 60. The created machining program 60 may be stored in the storage unit 16. The operator may edit the created machining program 60.

### (Modified example 7)

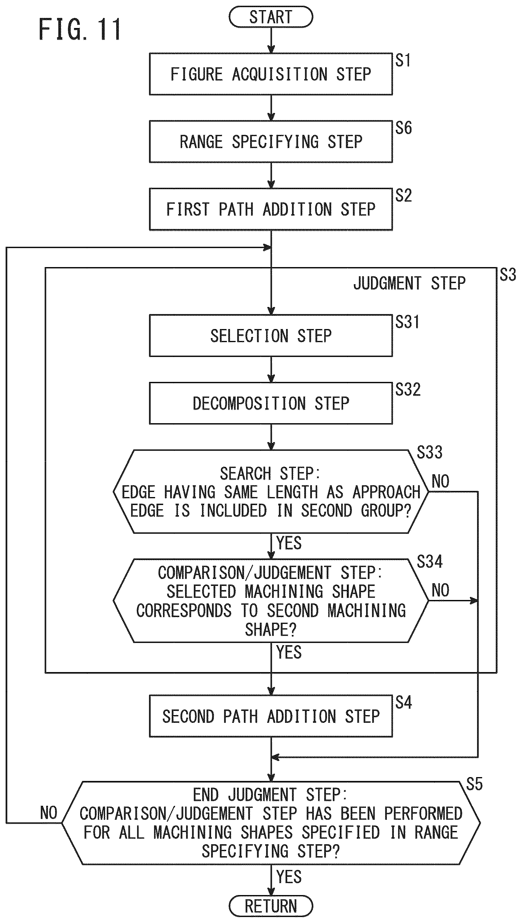

FIG. 11 is a flowchart illustrating the flow of a figure data edit method according to modified example 7.

The figure data edit device 10 may execute the figure data edit method of FIG. 11. The figure data edit method of FIG. 11 includes the components of the figure data edit method of FIG. 7. However, the figure data edit method of FIG. 11 further includes a range specifying step S6.

The range specifying step S6 is performed between the figure acquisition step S1 and the judgment step S3. The range specifying step S6 of FIG. 11 is performed between the figure acquiring step S1 and the first path adding step S2 for illustrative purposes.

In the range specifying step S6, the operator specifies, via the operation unit 14, the machining shape 24 included in the figure data 20. The number of machining shapes 24 specified here can be freely chosen by the operator. The machining shape 24 specified by the operator is stored in the storage unit 16.

In the selection step S31, the selection unit 40 selects the machining shape 24 specified in the range specification step S6. When a plurality of machining shapes 24 are specified in the range specifying step S6, the selection unit 40 selects one of the machining shapes 24.

In the end judgment step S5, the judgment unit 30 determines whether the comparison/judgment step S34 has been performed for all the machining shapes 24 specified in the range specification step S6.

When the comparison/judgment step S34 is performed for all the machining shapes 24 specified in the range specifying step S6 (end judgment step S5: YES), the figure data edit device 10 ends the figure data edit method. On the other hand, if the comparison/judgment step S34 has not been performed for all the machining shapes 24 specified in the range specifying step S6 (end judgment step S5: NO), the series of flow of the selection step S31 to the end judgment step S5 is performed again. Here, the selection unit 40 selects, from the machining shapes 24 specified in the range specifying step S6, one machining shape 24 that has not yet been compared with the first machining shape in the comparison/judgment step S34 performed after the start (START) of the figure data edit method.

According to this modified example, the candidates of the selected machining shape described in the embodiment are restricted to be within the range specified in the range specifying step S6. The operator's convenience is achieved by purposely allowing the candidates of the selected machining shape to be restricted based on the operator's specification.

There may be a situation where the machining shape 24 specified in the range specifying step S6 is a duplicate of the first machining shape. In this case, the judgment unit 30 excludes the first machining shape from the candidates of the selected machining shape.

The present invention is not limited to the above-described embodiment and the modified examples, and various configurations can be adopted without departing from the gist of the present invention.

### [Invention Derived from Embodiment]

The invention that can be understood from the above embodiment and the modified example will be described below.

### <First Invention>

The first invention is a figure data edit device (10) for editing figure data (20, 201) indicating a plurality of machining shapes (24) based on which a wire electric discharge machine machines one workpiece, comprising: a figure acquisition unit (26) configured to acquire the figure data; a path addition unit (32) configured to add a first approach path (38) leading to a first machining shape, which is any one of the plurality of machining shapes, to the figure data in response to an operation of an operator; a judgment unit (30) configured to select, from the plurality of machining shapes, one machining shape other than the first machining shape and judge whether the selected machining shape is a second machining shape (24) that is congruent or similar to the first machining shape; and an automatic path addition unit (34) configured to, when the selected machining shape is determined to be the second machining shape, automatically add a second approach path (52) leading to the second machining shape to the figure data in a manner so that a resultant figure is congruent or similar to a figure formed by the first machining shape and the first approach path.

This facilitates the editing of figure data representing machining shapes.

The path addition unit may add a first machining start position (36) for machining the first machining shape and the first approach path connecting the first machining start position and the first machining shape with each other, to the figure data in response to an operation of the operator, wherein the automatic path addition unit may automatically add, to the figure data, a second machining start position (50) for machining the second machining shape and the second approach path connecting the second machining start position and the second machining shape with each other. This facilitates not only the addition of the approach path but also the addition of the machining start position.

The judgment unit may include a decomposition unit (42) configured to decompose the first machining shape and the selected machining shape into a plurality of figure elements, and a comparison/judgment unit (46) configured to judge whether the selected machining shape is the second machining shape based on comparison between the plurality of figure elements of the first machining shape and the plurality of figure elements of the selected machining shape. Thus, it is judged whether the selected machining shape is the second machining shape at the level of figure elements.

The plurality of figure elements of the first machining shape may include a first group of a plurality of edges forming the first machining shape, the plurality of figure elements of the selected machining shape may include a second group of a plurality of edges forming the selected machining shape, and the judgment unit may further include a search unit (44) that searches the second group for one edge that has a length equal to a length of the edge that includes a contact point (P) with the first approach path among the first group, and the comparison/judgment unit may judge whether the selected machining shape is congruent with the first machining shape based on an order of the plurality of the edges of the first group determined based on the edge having the contact point and an order of the plurality of the edges of the second group determined based on the searched one edge. Thus, it is judged whether the selected machining shape is congruent with the first machining shape regardless of the inclination of the selected machining shape with respect to the first machining shape.

The judgment unit may select all the machining shapes other than the first machining shape, thereby judging whether each of all the machining shapes other than the first machining shape is the second machining shape. This facilitates the editing of figure data including second machining shapes.

The judging unit may select the machining shape specified by the operator, thereby judging whether the machining shape specified by the operator is the second machining shape by. This provides convenience for the operator.

### <Second Invention>

A second invention is a machining program creation device (54) including the figure data edit device of the first invention, and a machining program creation unit (58) that creates, based on the figure data, a machining program (60) for instructing a relative movement of a wire electrode of the wire electric discharge machine with respect to the workpiece.

This facilitates the editing of figure data representing machining shapes. Moreover, a machining program is created based on the edited figure data.

### <Third Invention>

A third invention is a figure data edit method for editing figure data (20, 201) indicating a plurality of machining shapes (24) based on which a wire electric discharge machine machines one workpiece, comprising: a figure acquisition step (S1) of acquiring the figure data; a path addition step (S2) of adding a first approach path (38) leading to a first machining shape, which is any one of the plurality of machining shapes, to the figure data in response to an operation of an operator; a judgment step (S3) of selecting, from the plurality of machining shapes, one machining shape other than the first machining shape and judging whether the selected machining shape is a second machining shape (24) that is congruent or similar to the first machining shape; and an automatic path addition step (S4) of, when the selected machining shape is determined to be the second machining shape, automatically adding a second approach path (52) leading to the second machining shape to the figure data in a manner so that a resultant figure is congruent or similar to a figure formed by the first machining shape and the first approach path.

This facilitates the editing of figure data representing machining shapes.

### Reference Signs List

10: Figure data edit device
20, 201: Figure data
24: machining shape
26: figure acquisition unit
30: Judgment unit
32: First path addition unit (path addition unit)
34: Second path addition unit (automatic path addition unit)
36: First machining start position
38: First approach path
40: Selection unit
42: Decomposition unit
44: Search unit
46: Comparison/judgment unit
50: Second machining start position
52: Second approach path
54: Machining program creation device
58: Machining program creation unit
60: Machining program

## Claims

1. A figure data edit device (10) for editing figure data (20, 201) indicating a plurality of machining shapes (24) based on which a wire electric discharge machine machines one workpiece, the figure data edit device comprising:
a figure acquisition unit (26) configured to acquire the figure data;
a path addition unit (32) configured to add a first approach path (38) leading to a first machining shape, which is any one of the plurality of machining shapes, to the figure data in response to an operation of an operator;
a judgment unit (30) configured to select, from the plurality of machining shapes, one machining shape other than the first machining shape and judge whether the selected machining shape is a second machining shape (24) that is congruent or similar to the first machining shape; and
an automatic path addition unit (34) configured to, when the selected machining shape is judged to be the second machining shape, automatically add a second approach path (52) leading to the second machining shape to the figure data in a manner so that a resultant figure is congruent or similar to a figure formed by the first machining shape and the first approach path.

2. The figure data edit device according to claim 1, wherein
the path addition unit adds a first machining start position (36) for machining the first machining shape and the first approach path connecting the first machining start position and the first machining shape with each other, to the figure data in response to an operation of the operator, and
the automatic path addition unit automatically adds, to the figure data, a second machining start position (50) for machining the second machining shape and the second approach path connecting the second machining start position and the second machining shape with each other.

3. The figure data edit device according to claim 1 or 2, wherein
the judgment unit includes
a decomposition unit (42) configured to decompose the first machining shape and the selected machining shape into a plurality of figure elements, and
a comparison/judgment unit (46) configured to judge whether the selected machining shape is the second machining shape based on comparison between the plurality of figure elements of the first machining shape and the plurality of figure elements of the selected machining shape.

4. The figure data edit device according to claim 3, wherein
the plurality of figure elements of the first machining shape include a first group of a plurality of edges forming the first machining shape,
the plurality of figure elements of the selected machining shape include a second group of a plurality of edges forming the selected machining shape,
the judgment unit further includes a search unit (44) that searches the second group for one edge that has a length equal to a length of the edge that includes a contact point (P) with the first approach path among the first group, and
the comparison/judgment unit judges whether the selected machining shape is congruent with the first machining shape based on an order of the plurality of edges of the first group determined based on the edge including the contact point and an order of the plurality of edges of the second group determined based on the searched one edge.

5. The figure data edit device according to any one of claims 1 to 4, wherein
the judgment unit selects all the machining shapes other than the first machining shape, thereby judging whether each of all the machining shapes other than the first machining shape is the second machining shape.

6. The figure data edit device according to any one of claims 1 to 4, wherein
the judgment unit selects the machining shape specified by the operator, thereby judging whether the machining shape specified by the operator is the second machining shape.

7. A machining program creation device (54) comprising:
the figure data edit device according to any one of claims 1 to 6; and
a machining program creation unit (58) that creates, based on the figure data, a machining program (60) for instructing a relative movement of a wire electrode of the wire electric discharge machine with respect to the workpiece.

8. A figure data edit method for editing figure data (20, 201) indicating a plurality of machining shapes (24) based on which a wire electric discharge machine machines one workpiece, the figure data edit method comprising:
a figure acquisition step (S1) of acquiring the figure data;
a path addition step (S2) of adding a first approach path (38) leading to a first machining shape, which is any one of the plurality of machining shapes, to the figure data in response to an operation of an operator;
a judgment step (S3) of selecting, from the plurality of machining shapes, one machining shape other than the first machining shape and judging whether the selected machining shape is a second machining shape (24) that is congruent or similar to the first machining shape; and
an automatic path addition step (S4) of, when the selected machining shape is judged to be the second machining shape, automatically adding a second approach path (52) leading to the second machining shape to the figure data in a manner so that a resultant figure is congruent or similar to a figure formed by the first machining shape and the first approach path.
